# EUROPÄISCHE PATENTANMELDUNG

(11) **EP 1 202 604 A2**
(43) Veröffentlichungstag der Anmeldung: **02.05.2002**
(21) Anmeldenummer: 01125090.9
(22) Anmeldetag: 22.10.2001
(51) Int. Cl.: H04R 3/00

(54) **Schaltungsanordnung zur Gewinnung eines Stereohilfsträgers und eines RDS-Trägers**

(30) Priorität: 24.10.2000 DE 10052557
(71) Anmelder: Philips Corporate Intellectual Property GmbH, 52064 Aachen (DE); Koninklijke Philips Electronics N.V., 5621 BA Eindhoven (NL)
(72) Erfinder: Hildebrandt,Günter.c/o Philips Corporate I.P.Gmbh, D-52064 Aachen (DE); Groot Huize,Gertjan.c/o Philips Corporate I.P.Gmbh, D-52064 Aachen (DE)
(74) Vertreter: Volmer, Georg, Dipl.-Ing.

(57) **Zusammenfassung**

Eine erfindungsgemäße Schaltungsanordnung zur Gewinnung eines 38kHz Stereohilfsträgers und eines 57kHz RDS-Trägers zur Dekodierung eines in einem demodulierten FM-Signal enthaltenen Stereosignals und/oder eines in einem demodulierten FM-Signal enthaltenen RDS-Signals ist bei einfachem Aufbau mit nur einem Phasenregelkreis und insbesondere nur einem spannungsgesteuerten Oszillator (2) ist dadurch gekennzeichnet dass ein Phasenregelkreis mit einem Schleifenfilter (1), mit einem spannungsgesteuerten Oszillator (2), mit einem ersten Phasendetektor (3), dem ein Referenzsignal mit einer Referenzfrequenz zugeführt wird, und mit einem zweiten Phasendetektor (4), dem das FM-Signal zugeführt wird, vorgesehen ist, wobei auf beide Phasendetektoren (3,4) außerdem das Ausgangssignal des spannungsgesteuerten Oszillators (2) in mittels Teilern (6,9:10,11) heruntergeteilter Form gekoppelt wird und wobei das auf den zweiten Phasendetektor rückgekoppelte Signal eine Frequenz von 19kHz aufweist, dass Teiler (9,10,12) vorgesehen sind, mittels derer das Ausgangssignal des spannungsgesteuerten Oszillators (2) heruntergeteilt wird und die den 38kHz Stereohilfsträger und den 57kHz RDS-Träger liefern.

## Beschreibung

Die Erfindung betrifft einer Schaltungsanordnung zur Gewinnung eines 38 kHz Stereohilfsträgers und eines 57 kHz RDS-Trägers zur Dekodierung eines in einem demodulierten FM-Signal enthaltenen Stereosignals und / oder eines in einem demodulierten FM-Signal enthaltenen RDS-Signals.

In Stero-FM-Signalen ist ein Pilotton mit der Frequenz von 19 kHz vorgesehen. In dem Frequenzbereich von 23 bis 53 kHz schließen sich die beiden Seitenbänder des Stereosignals L - R an. Zur Demodulierung dieses Signals ist eine Frequenz von 38 kHz zu gewinnen, die meist als Stereohilfsträger bezeichnet wird. Diese kann aus der Pilottonfrequenz von 19 kHz abgeleitet werden. Wird in dem FM-Signal zusätzlich eine RDS-Information übertragen, so ist diese einem RDS-Träger von 57 kHz aufmoduliert.

Nachdem Empfängerseitig das FM-Signal demoduliert wurde, weist es das oben erläuterte Spektrum auf. Zur Rückgewinnung des Stereosignals ist also ein Stereohilfsträger von 38 kHz und zur Rückgewinnung der RDS-Informationen ein RDS-Träger von 57 kHz zu generieren. In nach den dem Stand der Technik bekannten Konzepten sind für die Gewinnung dieser beiden Träger meist gesonderte Schaltungsanordnungen vorgesehen. Zur Gewinnung des 38 kHz Stereohilfsträgers ist meist eine Phasenregelschleife vorgesehen. Zusätzlich ist zur Gewinnung des RDS-Trägers ein Quarzoszillator oder ähnliches vorgesehen. Es besteht auch die Möglichkeit, für die Gewinnung beider Träger zwei gesonderte Phasenregelkreise vorzusehen; dies bedeutet jedoch einen hohen schaltungstechnischen Aufwand und hat darüber hinaus den Nachteil, dass zwei auf einem gemeinsamen Kristall vorgesehene Oszillatoren, die mit ähnlicher Frequenz arbeiten, sich gegenseitig beeinflussen.

Es ist Aufgabe der Erfindung, eine Schaltungsanordnung der eingangs genannten Art anzugeben, die einen möglichst einfachen Aufbau aufweist und eine gegenseitige Beeinflussung zweier spannungsgesteuerter Oszillatoren ausschließt.

Diese Aufgabe ist erfindungsgemäß dadurch gelöst,
dass ein Phasenregelkreis mit einem Schleifenfilter, mit einem spannungsgesteuerten Oszillator, mit einem ersten Phasendetektor, dem ein Referenzsignal mit einer Referenzfrequenz zugeführt wird, und mit einem zweiten Phasendetektor, dem das FM-Signal zugeführt wird, vorgesehen ist, wobei auf beide Phasendetektoren außerdem das Ausgangssignal des spannungsgesteuerten Oszillators in mittels Teilern heruntergeteilter Form gekoppelt wird und wobei das auf den zweiten Phasendetektor rückgekoppelte Signal eine Frequenz von 19kHz aufweist,
dass Teiler vorgesehen sind, mittels derer das Ausgangssignal des spannungsgesteuerten Oszillators heruntergeteilt wird und die den 38 kHz Stereohilfsträger und den 57 kHz RDS-Träger liefern,
dass ein nur beim Hochfahren der Schaltungsanordnung aktiver Frequenzregelkreis die beiden dem ersten Phasendetektor zugeführten Signale vergleicht und den spannungsgesteuerten Oszillator in einen vorgegebenen Frequenzbereich um die Referenzfrequenz des Referenzsignals steuert,
dass nach Erreichen des vorgegebenen Frequenzbereichs der Frequenzregelkreis deaktiviert und das Ausgangssignal des ersten Phasendetektors auf das Schleifenfilter gekoppelt wird und dass nachfolgend, sollte das demodulierte FM-Signal einen 19 kHz-Pilotton enthalten, das Ausgangssignal des zweiten Phasendetektors auf das Schleifenfilter gekoppelt wird.

Der Kerngedanke der erfindungsgemäßen Schaltungsanordnung besteht darin, nur ein Schleifenfilter und einen spannungsgesteuerten Oszillator für die Gewinnung sowohl des Stereohilfsträgers mit einer Frequenz von 38 kHz wie auch zur Gewinnung des RDS-Trägers mit einer Frequenz von 57 kHz einzusetzen, wobei auch in FM-Signalen ohne Pilotton der RDS-Träger rückgewonnen werden kann. Der spannungsgesteuerte Oszillator arbeitet mit einer relativ hohen Frequenz, die mittels mehrerer Teiler heruntergeteilt wird. Durch diese Herunterteilung werden die o. g. Frequenzen gewonnen. Somit ist eine gegenseitige Beeinflussung ansonsten vorgesehener spannungsgesteuerter Oszillatoren ausgeschlossen. Für die Gewinnung des RDS-Trägers wird kein gesonderter Quarz benötigt.

Es sind zwei Phasendetektoren vorgesehen, zwischen denen umgeschaltet wird. Diese Umschaltung ist abhängig davon, ob das FM-Signal, für das der Stereohilfsträger und der RDS-Träger gewonnen werden, einen Pilotton aufweist, ob es sich also tatsächlich um ein Stereosignal handelt oder nicht.

Beim Hochfahren der Schaltungsanordnung wird zunächst ein Frequenzregelkreis aktiviert, der ein heruntergeteiltes Referenzsignal und das heruntergeteilte Ausgangssignal des spannungsgesteuerten Oszillators miteinander vergleicht und der den spannungsgesteuerten Oszillator so ansteuert, dass dieser in einem vorgegebenen Frequenzbereich um die Referenzfrequenz des Referenzsignals gesteuert wird.

Sobald dieser erreicht ist, wird die FLL deaktiviert und es wird der erste Phasendetektor aktiviert. Dem ersten Phasendetektor wird das heruntergeteilte Referenzsignal sowie das heruntergeteilte Ausgangssignal des spannungsgesteuerten Oszillators zugeführt. In dieser Betriebsart arbeitet der Phasenregelkreis so, dass er sich auf die heruntergeteilte Frequenz des Referenzsignals einstellt. In dieser Betriebsart ist die Oszillatorfrequenz bereits auf wenige Hz genau voreingestellt.

Wird dann nachfolgend ein Pilotton erkannt, wird der zweite Phasendetektor aktiviert, der das heruntergeteilte Ausgangssignal des spannungsgesteuerten Oszillators und den in dem FM-Signal vorgesehenen Pilotton mit einer Frequenz von 19 kHz miteinander vergleicht. Somit stellt sich in dieser Betriebsart der Phasenregelkreis sehr genau auf die tatsächliche Frequenz des in dem FM-Signals vorgesehenen Pilotton ein.

Mit dieser Betriebsweise der erfindungsgemäßen Schaltungsanordnung in drei Stufen wird vor allem der Vorteil erreicht, dass der Phasenregelkreis sehr schmalbandig ausgelegt werden kann, da er beim Hochfahren bereits recht genau auf die Soll-Frequenz voreingestellt wird und erst nachdem dies geschehen ist, ein Einrasten auf die Pilottonträgerfrequenz erforderlich ist, welche dann bereits sehr nahe an der Arbeitsfrequenz des spannungsgesteuerten Oszillators liegt. Infolge dessen kann die Bandbreite des Phasenregelkreises sehr schmalbandig ausgelegt werden. Dies wiederum hat den Vorteil, dass der Phasenregelkreis auch bei kleiner Amplitude des Pilottons sicher rastet.

Im Ergebnis wird mittels der erfindungsgemäßen Schaltungsanordnung, welcher nur einen Phasenregelkreis und somit auch nur einen spannungsgesteuerten Oszillator aufweist, die Gewinnung sowohl des Stereohilfsträgers, wie auch des RDS-Trägers möglich. Durch die schmalbandige Auslegung des Phasenregelkreises kann ein optimales Verhalten erzielt werden. Dennoch ist ein Einrasten durch die drei Betriebsmodi sicher gewährleistet.

Sollte in dem dritten Betriebsmodus, in dem das Ausgangssignal des zweiten Phasendetektors auf den Eingang des Schleifenfilters rückgekoppelt wird, der Phasenregelkreis ausrasten, so wird, wie nach einer Ausgestaltung der Erfindung Anspruch 2 vorgesehen ist, die Schaltungsanordnung wieder in den zweiten Betriebsmodus zurückversetzt, in dem das Ausgangssignal des ersten Phasendetektors auf das Schleifenfilter gekoppelt wird. In diesem Betriebsmodus findet dann wieder ein Einrasten des Phasenregelkreises auf die Referenzfrequenz statt.

Gemäß einer weiteren Ausgestaltung der Erfindung nach Anspruch 4 wird ein Pilotton-Detektor eingesetzt, welcher die beiden Eingangssignale des zweiten Phasendetektors vornimmt. Diese Auslegung der Schaltungsanordnung bedeutet geringen Schaltungsaufwand, da die beiden Eingangssignale des zweiten Phasendetektors unmittelbar zur Pilottondetektion herangezogen werden können.

Dadurch, dass die Arbeitsfrequenz des spannungsgesteuerten Oszillators günstig gewählt wird und insbesondere dadurch, dass sie in einem hohen Frequenzbereich liegt, können, wie nach einer weiteren Ausgestaltung der Erfindung gemäß Anspruch 5 vorgesehen ist, Teiler vorgesehen sein, die sowohl für die Gewinnung des Stereohilfsträgers, des RDS-Trägers und ggf. auch des Eingangssignals des zweiten Phasendetektors herangezogen werden können. Somit können diese Teiler gleichzeitig mehrere Aufgaben erfüllen.

Hierzu kann vorteilhaft, wie gemäß einer weiteren Ausgestaltung der Erfindung nach Anspruch 6 vorgesehen ist, der spannungsgesteuerte Oszillator eine Soll-Frequenz von 10,944 MHz aufweisen. Aus dieser Frequenz kann dann vorteilhaft das Eingangssignal des ersten Phasendetektors mittels eines Teilers durch 3.485 auf einfache Weise gewonnen werden.

Wie gemäß einer weiteren Ausgestaltung der Erfindung nach Anspruch 7 vorgesehen ist, weist das Referenzsignal eine Referenzfrequenz von 75,368/24 MHz auf. Dabei können die 75,368 MHz vorteilhaft mittels einer Teilung durch 272 aus einer Quarzfrequenz von 20,5 MHz gewonnen werden.

In dem zweiten und dem dritten Betriebsmodus der erfindungsgemäßen Schaltungsanordnung, in dem auf den Eingang des Schleifenfilters entweder das Ausgangssignal des ersten oder des zweiten Phasendetektors rückgekoppelt wird, ist die FLL zu deaktivieren. Dies wird vorteilhaft dadurch erreicht, dass, wie gemäß einer weiteren Ausgestaltung der Erfindung nach Anspruch 9 vorgesehen ist, der Frequenzregelkreis in diesem Falle abgeschaltet wird.

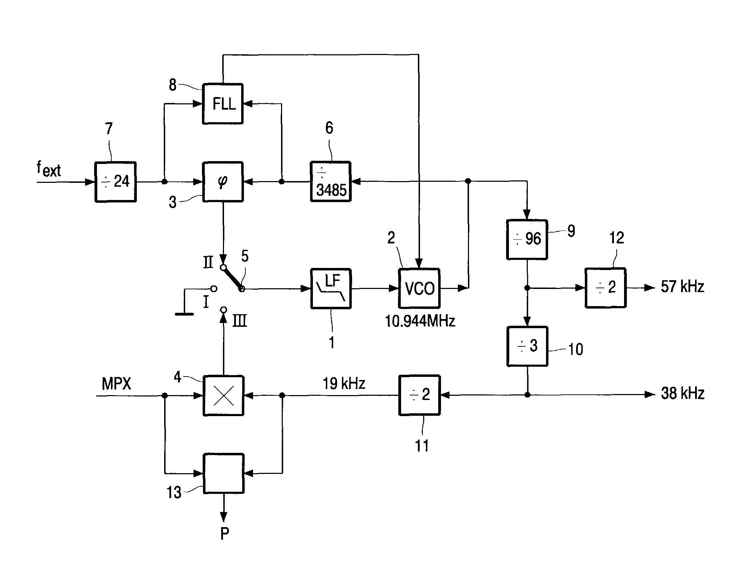

Nachfolgend wird ein Ausführungsbeispiel der Erfindung anhand der einzigen Figur der Zeichnung näher erläutert.

Die einzige Figur der Zeichnung zeigt eine erfindungsgemäße Schaltungsanordnung zur Gewinnung eines 38 kHz Stereohilfsträgers und eines 57 kHz RDS-Trägers in Form eines Blockschaltbildes.

Der Schaltungsanordnung wird ein demoduliertes FM-Signal zugeführt, das in der Figur mit MPX bezeichnet ist. Dieses Signal enthält in Basisbandlage bis etwa 15 kHz ein Stereosummensignal L + R, wobei L mit dem linken Kanal und R für den rechten Kanal steht. Bei etwa 19 kHz enthält dieses Signal einen Pilotton, der signalisiert, dass es sich um ein Stereosignal handelt. Zwischen 23 kHz und 53 kHz erstrecken sich zwei Seitenbänder eines Differenzsignals L - R . Diese Seitenbänder erstrecken sich um 38 kHz herum. Zur Demodulation dieses Differenzsignals ist ein sogenannter Stereohilfsträger mit einer Frequenz von 38 kHz empfängerseitig erforderlich.

Gegebenenfalls können in dem Signal zusätzlich sogenannte RDS-Informationen übertragen werden, wobei RDS für Radio-Daten-System steht. Diese Informationen sind einem RDS-Träger mit einer Frequenz von 57 kHz aufmoduliert.

Die erfindungsgemäße Schaltungsanordnung soll in der Lage sein, den Stereohilfsträger von 38 kHz und den RDS-Träger von 57 kHz zu gewinnen. Dazu ist in der erfindungsgemäßen Schaltungsanordnung gemäß dem Blockschaltbild der Zeichnung ein Phasenregelkreis vorgesehen, welcher ein Schleifenfilter 1 und einen diesem nachgeschalteten steuerbaren Oszillator 2 aufweist. Der steuerbare Oszillator 2 arbeitet mit einer Soll-Frequenz von 10,944 MHz.

Die Schaltungsanordnung weist ferner einen ersten, digitalen Phasendetektor 3 sowie einen zweiten, linearen Phasendetektor 4 auf. Die Ausgangssignale beider Phasendetektoren sind über einen Schalter 5 alternativ auf den Eingang des Schleifenfilters 1 schaltbar. Der Schalter 5 gestaltet ferner, ein Bezugspotential auf den Eingang des Schleifenfilters 1 zu koppeln.

Je nach Schalterstellung des Schalters 5 arbeitet der Phasenregelkreis entweder mit dem ersten Phasendetektor 3 oder mit den zweiten Phasendetektor 4. In der dritten Betriebsart wird der VCO durch keinen der beiden Phasendetektoren 3 oder 4 gesteuert.

Das Ausgangssignal des spannungsgesteuerten Oszillators 2 ist über einen Teiler 6, der das Signal durch die natürliche Zahl 3485 teilt, geführt. Das Ausgangssignal des Teilers 6 gelangt auf einen Eingang des ersten, digitalen Phasendetektors 3. Auf den zweiten Eingang dieses Phasendetektors 3 gelangt ein Referenzsignal mit einer Referenzfrequenz, welche 75,368 geteilt durch 24 MHz beträgt. Der Quotient 24 wird durch einen Teiler 7 realisiert. Das in der Figur mit fₑₓₜ gekennzeichnete externe Signal weist eine Frequenz von 75,368 MHz auf und kann beispielsweise aus einem Quarzoszillator mit 20,5 MHz Arbeitsfrequenz durch Teilung mit dem Quotienten 272 gewonnen worden sein.

Die Schaltungsanordnung weist ferner einen Frequenzregelkreis 8 auf, dessen beiden Eingängen die gleichen Eingangssignale zugeführt werden wie dem ersten, digitalen Phasendetektor 3. Das Ausgangssignal des Frequenzregelkreises ist auf den spannungsgesteuerten Oszillator 2 gekoppelt.

Das Ausgangssignal des spannungsgesteuerten Oszillators 2 gelangt ferner über einen Teiler 9, der mit einem Quotienten von 96 arbeitet, einem Teiler 10, der einem Quotienten von 3 arbeitet und einem Teiler 11, der mit einem Quotienten von 2 arbeitet, auf einen Eingang des zweiten, linearen Phasendetektors 4. Einem anderen Eingang dieses Phasendetektors 4 ist das demodulierte FM-Signal zugeführt, das in der Figur mit MPX gekennzeichnet ist.

Das Ausgangssignal des Teilers 9 gelangt auf einen Teiler 12, der mit einem Quotienten von 2 arbeitet. Aufgrund der Soll-Arbeitsfrequenz des steuerbaren Oszillators von 10,944 MHz liefert der Teiler 12 ausgangsseitig ein Signal mit etwa 57 kHz, das als rückgewonnener RDS-Träger vorgesehen ist. In entsprechender Weise liefert der Teiler 10 aufgrund der vorgesehenen Teilverhältnisse den Stereohilfsträger mit einer Frequenz von 38 kHz.

Die beiden dem zweiten, linearen Phasendetektor 4 zugeführten Eingangssignale werden ebenfalls einem Pilotton-Detektor 13 zugeführt, dessen Arbeitsweise hier im einzelnen nicht erläutert werden soll. Der Pilotton-Detektor kann durch Vergleich des FM-Stereosignals MPX und des Ausgangssignals des Teilers 11, das eine Frequenz von 19 kHz aufweist, durch Überlagerung feststellen, ob das Signal MPX einen Pilotton enthält oder nicht. Der Pilotton-Detektor 13 gibt ein entsprechendes Signal P ab.

Im folgenden soll die Arbeitsweise der Schaltung näher erläutert werden.

Bei Hochfahren der Schaltungsanordnung, das heißt also nach einem Aktivieren der Strom- bzw. Spannungsversorgung der Schaltungsanordnung wird bei dieser erfindungsgemäß zunächst sichergestellt, dass der spannungsgesteuerte Oszillator 2 ungefähr mit der Soll-Arbeitsfrequenz von 10,944 MHz arbeitet. Dazu ist der Schalter 5 zunächst in die Stellung I zu versetzen. In dieser Stellung wird der spannungsgesteuerte Oszillator 2 ausschließlich durch den Frequenzregelkreis 8 gesteuert. Dieser Frequenzregelkreis vergleicht die heruntergeteilte Arbeitsfrequenz des spannungsgesteuerten Oszillators 2 mit der Frequenz des Referenzsignals, das von Teiler 7 geliefert wird. Diese Referenzfrequenz ist dabei so gewählt, dass der spannungsgesteuerte Oszillator durch den Frequenzregelkreis 8 auf die Soll-Arbeitsfrequenz von 10,944 MHz eingestellt wird.

Hat der spannungsgesteuerte Oszillator 2 diese Arbeitsfrequenz erreicht, wird der Schalter 5 in die Position II gebracht, und gleichzeitig wird der Frequenzregelkreis 8 deaktiviert. Dies hat nun zur Folge, dass der Phasendetektor 3, der Schleifenfilter 1 und der spannungsgesteuerte Oszillator 2 als Phasenregelkreis arbeiten. Nunmehr wird der spannungsgesteuerte Oszillator 2 in diesem Phasenregelkreis genau bezüglich Frequenz und Phase auf das Referenzsignal bzw. dessen Referenzfrequenz, das dem zweiten Eingang des Phasendetektors 3 zugeführt wird, eingestellt.

In dieser Arbeitsweise ist die Schaltungsanordnung bereits in der Lage einen recht genauen RDS-Träger von 57 kHz zu liefern, dessen Frequenzgenauigkeit hinreichend ist, um RDS-Informationen, die dem MPX-Signal aufmoduliert sein können zu demodulieren.

Es wird nun laufend durch den Pilotton-Detektor 13 festgestellt, ob es sich bei dem MPX-Signal um ein Stereosignal handelt, welches einen Pilotton aufweist. Sobald dies der Fall ist und sobald der Pilotton-Detektor das entsprechende Signal P liefert, wird der elektronische Schalter 5 in die Position III versetzt. Es ist nun ein Phasenregelkreis aktiv, der aus dem zweiten linearen Phasendetektor 4, dem Schleifenfilter 1 und dem spannungsgesteuerten Oszillator 2 besteht. Dieser Phasenregelkreis rastet nunmehr genau auf die Frequenz des in dem MPX-Signals vorhandenen Pilotton ein. Somit liefert nun der Teiler 10 einen StereoHilfsträger von 38 kHz, der bezüglich Frequenz und Phase relativ zu dem Pilotton des MPX-Signals richtig eingestellt ist.

Somit kann ein in der Figur nicht dargestellter Stereodekoder mittels dieses Stereohilfsträgers eine Demodulation des oben erläuterten Stereosignals vornehmen.

Es kann im laufenden Betrieb der Fall eintreten, dass bei einem Betrieb, in dem der Schalter 5 auf Position III steht, der Phasenregelkreis ausrastet. In diesem Falle wird der Schalter 5 wieder in die Position 2 versetzt, so dass die Arbeitsfrequenz des Phasenregelkreises bzw. des spannungsgesteuerten Oszillator etwa auf der Sollfrequenz gehalten wird und nur abhängig von der Referenzfrequenz ist. Sobald dann wieder ein Pilotton erkannt wird, wird der Schalter 5 wieder in die Position III versetzt.

Ein wesentlicher Vorteil dieser Schaltungsanordnung besteht darin, dass der spannungsgesteuerte Oszillator bei Schalterstellung II des Schalters 5 bereits recht genau auf der Soll-Arbeitsfrequenz ist. Daher kann die PLL beim umlegen des Schalters 5 auf die Position III leicht einrasten und kann somit sehr schmalbandig ausgelegt werden. Dies hat den Vorteil, dass die PLL auch bei geringer Amplitude des Pilottons sicher einrastet.

Ferner wird der erfindungsgemäßen Schaltungsanordnung mit nur einem Phasenregelkreis oder genauer mit nur einem spannungsgesteuerten Oszillator 2 eine Gewinnung beider Trägersignale, nämlich des RDS-Trägers mit 57 kHz und des Stereohilfsträger mit 38 kHz, erzielt.

Nach der oben beschriebenen Betriebsweise ist klar, dass in dem Falle, dass es sich bei dem MPX-Signal tatsächlich um ein Stereosignal mit einem Pilotton handelt, der Phasenregelkreis sehr genau auf dessen Frequenz einrastet und somit die von der Schaltungsanordnung gelieferten Signale mit 38 kHz und 57 kHz sehr exakt diese Sollfrequenzen aufweisen. Es kann der Fall eintreten, dass es sich bei dem MPX-Signal um ein Mono-Signal handelt, das keinen Pilotton enthält. In diesem Falle wird nach der oben beschriebenen Arbeitsweise der Schalter 5 in der Position 2 belassen, da kein Pilotton detektiert wird. In dieser Arbeitsweise der Schaltung wird zwar der Stereohilfsträger mit einer Frequenz von 38 kHz nicht benötigt; es kann jedoch ein RDS-Signal im MPX-Signal enthalten sein, so dass der RDS-Träger mit einer Frequenz von 57 kHz benötigt wird. Dessen Frequenz ist in dieser Arbeitsweise jedoch hinreichend genau eingehalten, da diese Frequenz von dem gegebenenfalls quarzgenauen Referenzsignal abgeleitet wird. Auch für diese besondere Betriebsart liefert die erfindungsgemäße Schaltungsanordnung also einen RDS-Träger mit hinreichender Frequenzgenauigkeit.

## Patentansprüche

1. Schaltungsanordnung zur Gewinnung eines 38 kHz Stereohilfsträgers und eines 57 kHz RDS-Trägers zur Dekodierung eines in einem demodulierten FM-Signal enthaltenen Stereosignals und/oder eines in einem demodulierten FM-Signal enthaltenen RDS-Signals,
**dadurch gekennzeichnet,**
**dass** ein Phasenregelkreis mit einem Schleifenfilter (1), mit einem spannungsgesteuerten Oszillator (2), mit einem ersten Phasendetektor (3), dem ein Referenzsignal mit einer Referenzfrequenz zugeführt wird, und mit einem zweiten Phasendetektor (4), dem das FM-Signal zugeführt wird, vorgesehen ist, wobei auf beide Phasendetektoren (3,4) außerdem das Ausgangssignal des spannungsgesteuerten Oszillators (2) in mittels Teilern (6,9: 10,11) heruntergeteilter Form gekoppelt wird und wobei das auf den zweiten Phasendetektor rückgekoppelte Signal eine Frequenz von 19kHz aufweist,
**dass** Teiler (9,10,12) vorgesehen sind, mittels derer das Ausgangssignal des spannungsgesteuerten Oszillators (2) heruntergeteilt wird und die den 38 kHz Stereohilfsträger und den 57 kHz RDS-Träger liefern,
**dass** ein nur beim Hochfahren der Schaltungsanordnung aktiver Frequenzregelkreis (8) die beiden dem ersten Phasendetektor (3) zugeführten Signale vergleicht und den spannungsgesteuerten Oszillator (2) in einen vorgegebenen Frequenzbereich um die Referenzfrequenz des Referenzsignals steuert,
**dass** nach Erreichen des vorgegebenen Frequenzbereichs der Frequenzregelkreis (8) deaktiviert und das Ausgangssignal des ersten Phasendetektors (3) auf das Schleifenfilter (1) gekoppelt wird
und **dass** nachfolgend, sollte das demodulierte FM-Signal einen 19 kHz-Pilotton enthalten, das Ausgangssignal des zweiten Phasendetektors (4) auf das Schleifenfilter (1) gekoppelt wird.

2. Anordnung nach Anspruch 1,
**dadurch gekennzeichnet,**
**dass** wenn während des Betriebs, in dem das Ausgangssignal des zweiten Phasendetektors (4) auf das Schleifenfilter (1) gekoppelt wird, der Phasenregelkreis ausrastet, der Eingang des Schleifenfilters (1) wieder auf das Ausgangssignal des ersten Phasendetektors (3) geschaltet wird.

3. Anordnung nach Anspruch 1,
**dadurch gekennzeichnet,**
**dass** ein elektronischer
Umschalter (5) vorgesehen ist, welcher mittels einer Steuerlogik gesteuert wird und mittels dessen der Eingang des Schleifenfilters (1) beim Hochfahren auf ein Bezugspotential, nach Erreichen des vorgegebenen Frequenzbereichs auf den Ausgang des ersten Phasendetektors (3) und nachfolgend, sollte das demodulierte FM-Signal einen 19 kHz-Pilotton enthalten, auf den Ausgang des zweiten Phasendetektors (4) gekoppelt wird.

4. Anordnung nach Anspruch 1,
**dadurch gekennzeichnet,**
**dass** ein Pilotton-Detektor (13) vorgesehen ist, welcher einen Vergleich beider Eingangssignale des zweiten Phasendetektors (4) vornimmt.

5. Anordnung nach Anspruch 1,
**dadurch gekennzeichnet,**
**dass** wenigstens einige der vorgesehenen Teiler (9,10) gemeinsam für die Gewinnung des Stereohilfsträgers, des RDS-Trägers und/oder des aus dem Ausgangssignal des spannungsgesteuerten Oszillators (2) abgeleiteten Eingangssignals des zweiten Phasendetektors (4) eingesetzt werden.

6. Anordnung nach Anspruch 1,
**dadurch gekennzeichnet,**
**dass** der spannungsgesteuerte Oszillator (2) eine Soll-Frequenz von 10,944 MHz aufweist und dass das aus dem Ausgangssignal des spannungsgesteuerten Oszillators (2) abgeleitete Eingangssignal des ersten Phasendetektors (3) mittels eines Teilers (6) gewonnen wird, der das ihm zugeführte Signal durch 3485 teilt.

7. Anordnung nach Anspruch 1,
**dadurch gekennzeichnet,**
**dass** das Referenzsignal eine Referenzfrequenz von 75,368/24 MHz aufweist.

8. Anordnung nach Anspruch 1,
**dadurch gekennzeichnet,**
**dass** der erste Phasendetektor (3) digital und der zweite Phasendetektor (4) linear ausgelegt ist.

9. Anordnung nach Anspruch 1,
**dadurch gekennzeichnet,**
**dass** der Frequenzregelkreis (8) abgeschaltet wird, wenn nach dem Hochfahren der Eingang des Schleifenfilters (1) auf den Ausgang des ersten Phasendetektors (3) gekoppelt wird.
